**Europäisches Patentamt**

**European Patent Office**

**Office européen des brevets**

(11) Veröffentlichungsnummer: **0 143 922**
**B1**

(12) **EUROPÄISCHE PATENTSCHRIFT**

(45) Veröffentlichungstag der Patentschrift:
08.06.88

(21) Anmeldenummer: **84111059.6**

(22) Anmeldetag: **17.09.84**

(51) Int. Cl.⁴: **F 16 B 13/06,** F 24 D 19/02

(54) Spreizdübel, insbesondere zur Befestigung von Plattenheizkörpern.

(30) Priorität: **05.10.83 DE 3336168**

(43) Veröffentlichungstag der Anmeldung:
**12.06.85 Patentblatt 85/24**

(45) Bekanntmachung des Hinweises auf die Patenterteilung:
**08.06.88 Patentblatt 88/23**

(84) Benannte Vertragsstaaten:
**AT BE CH DE FR GB IT LI LU NL SE**

(56) Entgegenhaltungen:
**AT-B-324 624**
**AT-B-342 840**
**CH-A-496 177**
**DE-A-1 814 499**
**DE-A-1 965 242**
**DE-B-1 625 394**
**DE-B-1 810 295**
**DE-C-263 925**

(73) Patentinhaber: **Christopeit, Horst,**
**Winzermarkstrasse 99, D-4320 Hattingen (DE)**

(72) Erfinder: **Christopeit, Horst, Winzermarkstrasse 99,**
**D-4320 Hattingen (DE)**

(74) Vertreter: **Stratmann, Ernst, Dr.- Ing.,**
**Schadowplatz 9, D-4000 Düsseldorf 1 (DE)**

EP 0 143 922 B1

LIBER, STOCKHOLM 1988

## Beschreibung

Die Erfindung betrifft einen Spreizdübel, insbesondere zur Befestigung von Plattenheizkörpern, bestehend aus einer an einem Ende mit achsial verlaufenden Schlitzen versehenen Rundhülse, einem durch die Rundhülse hindurchreichenden Schraubbolzen, der in ein eine konische Außenfläche aufweisendes Endteil eingeschraubt ist, das mit dem sich verjüngenden Ende des Konus in das geschlitzte Ende der Rundhülse drehgesichert hineinreicht, und mit einem am anderen Ende des Schraubbolzens angeordneten Schraubbolzenkopf, der sich auf einem auf dem anderen Rundhülsenende aufgesetzten äußeren Endteil abstützt und beim Festziehen den Konus in die Rundhülse hineinzieht und dabei das geschlitzte Ende der Rundhülse auseinanderdrückt, wobei das innere Endteil zwei achsial zueinander versetzte konusförmige Bereiche aufweist, und wobei die Rundhülse entsprechend zu diesen Bereichen angeordnete Auflaufflächen besitzt und einen Innendurchmesser hat, der das Einführen zumindest des einen der Konusbereiche des inneren Endteils ermöglicht.

Ein derartiger Spreizdübel ist aus der DE-A-1 625 394 bereits bekannt.

Der Vorteil derartiger mit Doppelkonus versehener Spreizdübel liegt in der gleichmäßigeren Klemmwirkung, da die achsialen Dübelteile im wesentlichen parallel gespreizt werden, so daß praktisch die gesamte Außenfläche der Hülse halternd wirkt, im Gegensatz zu mit nur einem Konus versehenen Spreizdübeln, bei denen nur ein Teil, nämlich das rückwärtige Ende der Hülse eine Klemmwirkung ausübt. Die Klemmenwirkung wird gemäß der Schilderung in der DE-B-1 625 394 noch dadurch verbessert, daß die sich verjüngenden Enden der beiden Spreizkörper beide in Richtung zum vorderen Dübelende auf entsprechende konvergierende Innenflächen der Hülsen auflaufen.

Die erwähnte Druckschrift schildert dann ältere Ausführungsformen, u. a. doppelt spreizende Dübel, bei denen die einzelnen Zungen bis zur Einführung in das Bohrloch mittels geschlitzter Ringe zusammengehalten werden, was als nachteilig bezeichnet wird, da dadurch die Handhabung umständlich wäre. Desweiteren werden biegsame Bänder zum Verbinden der Zungen miteinander erwähnt, jedoch würde dies gemäß der Druckschrift zu unsymetrischen Spreizungen und damit unterschiedlichen Flächenpressungen führen. Zur Vermeidung aller dieser Nachteile sei dann bekannt geworden, alle Zungen einer Hülse an ihrem vorderen Ende durch sprengbare Stege miteinander zu verbinden, so daß sie zunächst eine recht stabile Einheit bildeten, die nicht schon vor der Benutzung auseinanderfallen könne, wie es bei den Dübeln mit losen Einzelzungen und mit Spreizring der Fall sei. Erst nach erfolgter Einführung des Dübels in die Bohrung und zwar erst im Zuge der fortschreitenden Spreizung würden dann die Zungen durch Sprengung der Stege voneinander getrennt werden. Nach dieser Trennung der Zungen voneinander ergäbe sich dann für den ganzen Umfang der Hülse eine gleichmäßige Flächenpressung.

Der Stand der Technik hat somit ein wesentliches Problem, nämlich eine möglichst gleichförmige Flächenpressung sicherzustellen, bereits erkannt.

Nachteilig bleibt bei dem bekannten Spreizdübel jedoch, daß ein erneutes Lösen des Spreizdübels - beispielsweise, um den Spreizdübel neu auszurichten - auf Schwierigkeiten stößt, da er durch den Spreizvorgang irreversibel verändert worden ist, insbesondere dadurch, daß beim Stand der Technik vorhandene sprengbare Stege, mit denen die einzelnen Zungen des Spreizdübels zunächst zusammengehalten werden, während des Spreizvorganges gesprengt und die einzelnen Spreizzungen damit voneinander getrennt werden. Dadurch wird ein Nachrichten des Spreizdübels unmöglich gemacht. Derartige Nachrichtarbeiten sind aber insbesondere dann erforderlich, wenn zwischen dem Heizkörper und der Wand nachträglich Isolierungen angebracht werden, so daß zunächst nicht genau bekannt ist, welche Wandabstände einzuhalten sind.

Aus der DE-A-1 814 499 sind Spreizdübel bekannt, die eine nicht ganz so gleichmäßige Klemmwirkung ermöglichen, dafür aber ohne Sprengringe auskommen. Gemäß dieser Veröffentlichung ist die Rundhülse zumindest gemäß einer der mehreren Ausführungsformen (Fig. 3 und 4) über die gesamte Rundhülsenlänge geschlitzt, so daß ausreichende Spreizwirkung sowohl am Vorder- wie auch am Hinterende erreichbar ist, jedoch ist der auf das Bohrloch ausgeübte Spreizdruck nahe dem Schlitz größer als am vom Schlitz abgewandten Umfangsbereich. Auch hier ist als Nachteil zu sehen, daß ein erneutes Lösen des Spreizdübels auf Schwierigkeiten stößt, da er durch den Spannvorgang verformt wird.

Beide Druckschriften weisen den weiteren Nachteil auf, daß die Herstellung der Rundhülse durch Stanzeinrichtungen entweder gar nicht vorgesehen ist (so bei der DE-B-1 625 394), oder auf erhebliche Schwierigkeiten stößt (so bei der DE-A-1 814 499). Bei der letztgenannten Druckschrift ergeben sich Schwierigkeiten insbesondere dadurch, daß die formgerechte (d. h. genau runde) Herstellung der Rundhülse mit Hilfe von Stanzeinrichtungen praktisch nicht möglich ist. Schwierig ist es bei der letztgenannten Druckschrift auch, zu erreichen, daß die Rundhülse nicht nur an den Außenbereichen, sondern auch in der Mitte eine ausreichende nach außen gerichtete Spannkraft ausübt.

Die Herstellbarkeit des Spreizdübels durch Preßeinrichtungen ist aber Voraussetzung für eine preiswerte Massenherstellung.

Die Spreizdübelteile mittels einer Klammer zusammenzuhalten ist an sich bekannt, so wird beispielsweise im ersten Absatz der DE-A-1 814 499 auf eine Patentanmeldung P 1 775 598.5 (DE-A-1 775 598) hingewiesen, gemäß der auch Spreizdübel zum Befestigen von Gegenständen bekannt sind, die aus halb rohrförmigen, mittels Profilgummiringen oder Stahlfedern zusammengehaltenen Spannbacken bestehen. Nähere Einzelheiten fehlen jedoch, außerdem wird diese Lösung für nicht einfach und preiswert genug bezeichnet.

Ähnliche Hinweise finden sich auch in der DE-A-1 625 394.

Aufgabe der Erfindung ist es, den Spreizdübel der eingangs genannten Art dahingehend zu verbessern, daß er unter Beibehaltung möglichst gleichförmiger Spannwirkung sowohl in achsialer Richtung wie auch in radialer Richtung die Möglichkeit eröffnet, ohne große Probleme wieder gelockert und neu gespannt zu werden, wobei gleichzeitig eine Herstellung durch Presseinrichtungen möglich sein soll.

Gelöst wird die Aufgabe erfindungsgemäß dadurch, daß die Rundhülse zwei oder mehr Einschnürungen besitzt, die auch die Auflaufflächen bilden, daß sich zumindest eine dieser Einschnürung im geschlitzten Bereich befindet, in den der eine der Konusbereiche beim Anziehen eindringt und daß die Rundhülse aus zwei durch Pressen gebildete Hülsenhalbschalen besteht, die durch zumindest eine die Rundhülse umgreifende Klammer zusammengehalten werden.

Durch diese Maßnahmen wird erreicht, daß einerseits eine billige Massenherstellung gewährleistet ist, andererseits eine sowohl in achsialer Richtung wie auch in Umfangsrichtung recht gleichmäßige Spannkraft ausgeübt wird, so daß auch bei kritischem Mauerwerk, wie Hohlbocksteinmauerwerk, eine sichere Verankerung ohne Beschädigung des Mauerwerks ermöglicht wird, und daß auch bei Bedarf der Spreizdübel wieder gelockert, nachgerichtet und wieder angezogen werden kann.

Die zumindest zwei Einschnürungen ergeben zudem nicht nur Auflaufflächen, die in Pressbearbeitung herstellbar sind, die Einschnürungen haben den weiteren Vorteil, daß in ihnen die die Rundhülse umgreifende Klammer derart untergebracht werden kann, daß sie beim Einschieben des Spreizdübels in ein Bohrloch nicht störend in Erscheinung treten.

Insgesamt ergibt sich damit ein Spreizdübel, der preiswerte Herstellung, ausreichende gleichmäßige Spannkraft sowie Nachstellbarkeit in idealer Weise miteinander verbindet.

Ein weiterer großer Vorteil des erfindungsgemäßen Spreizdübels ist es, daß zahlreiche günstige Ausgestaltungen ermöglicht werden. So könnte das eine konische Außenfläche aufweisende Endteil, das mit dem sich verjüngenden Ende des Konus in das geschlitzte Ende der Rundhülse drehgesichert hineinreicht, mittels einem in einen der Schlitze hineinreichenden Vorsprung drehgesichert sein (Anspruch 2).

Es kann günstig sein, das äußere (nach Einführen in der Wand außerhalb der Wand verbleibende) Ende der Rundhülse mit einem reduzierten Durchmesser zu versehen, wobei dieser reduzierte Durchmesser von einem äußeren Endteil umgriffen ist, dessen Außenumfang (insbesondere dessen nach oben weisender Bereich) mit der Fluchtlinie des nicht reduzierten Rundhülsendurchmessers (wiederum insbesondere mit dessen nach oben weisenden Bereichs) übereinstimmt und dadurch eine ebene Auflagefläche für weitere Halterungteile bildet (Anspruch 7). Ein derartiges, beispielsweise als Kunststoffteil ausgebildetes äußeres Endteil kann ebenfalls als Klammereinrichtung für die Halbschalen dienen.

Die Rundhülse kann nahe ihrem äußeren Ende eine Gewindebohrung aufweisen, die durch eine Gewindetüte gebildet wird, die in die Rundhülsenhälften eingedrückt ist (Anspruch 8). Eine derartige Gewindebohrung kann wiederum zur Befestigung von Halteeinrichtungen dienen.

Versieht man die Bohrkonsole mit einem Exzenterkopf, beispielsweise mit einem Kunststoffexzenterkopf zur Ausrichtung des zu befestigenden Heizkörpers oder dergleichen, ist es zur Erhöhung der Tragkraft günstig, wenn man den Exzenterkopf in eine Mehrkantform bringt, insbesondere in eine Vier- oder Sechskantform (Ansprüche 9, 10). Durch die Sechskantform wird anstelle einer punktförmigen Auflage, die sich bei einer runden Form ergeben würde, eine flächige Auflage erreicht (unter Inkaufnahme einer stufenförmigen Einstellbarkeit), wodurch sich die Flächenpressung wiederum drastisch reduziert und sich auch dadurch eine höhere Belastbarkeit ergibt, außerdem verringert sich die Gefahr, daß durch Hebelwirkung eine ungewollte Verstellung des Exzenters eintritt.

Ein Zusammenhalten der Halbschalen der Bohrkonsole kann im übrigen auch durch einen Gummiring, einen Federring aus Stahl oder sogar durch Klebstreifen erfolgen (Anspruch 4), was einer Vereinfachung der Herstellung dienlich wäre. Der erfindungsgemäße Spreizdübel ist insbesondere zur Befestigung von Plattenheizkörpern geeignet, wobei der Spreizdübel insbesondere Teil einer Plattenheizkörperbefestigung sein kann, die eine vertikale, auf dem Spreizdübel aufliegende Schiene oder Platte sowie eine weitere, durch eine Schiene oder einen Seitenschieber gebildete Befestigungspratze für den Rand des Plattenheizkörpers umfaßt, die in Richtung der ersten Schiene oder Platte vertikal oder in einer senkrechten Richtung dazu horizontal an der ersten Schiene oder Platte verstellbar befestigt ist (Anspruch 12).

Gemäß einer noch anderen Ausführungsform (Anspruch 13) kann die erste Schiene oder Platte mit einem Durchbruch für eine Klemmschraube und die zweite Schiene mit einem oder auch mit mehreren Langlöchern oder auch mit einem Längsschlitz versehen sein, wobei durch den Durchbruch und das Langloch oder den Längsschlitz eine Klemmschraube hindurchführbar ist, die die beiden Schienen miteinander einstellbar fest verbindet.

Zur Drehsicherung einer derartigen Klemmschraube ist es günstig, wenn man den Durchbruch prismatischen Querschnitt gibt, z. B. quadratischen Querschnitt, und wenn der Kopf der Klemmschraube mit einem entsprechend geformten Kopfhals drehsichernd in dem Durchbruch einsetzbar ist (Anspruch 14).

Es ist auch günstig, wenn die Platte unterhalb des Durchbruchs zumindest einen, vorzugsweise zwei vertikal ausgerichtete vorspringende Streifen trägt, die bei vertikaler Anordnung der zweiten Schiene in den Schlitz der Schiene drehsichernd eingreifen oder sich an den Seitenkanten der Schiene drehsichernd anlegen (Anspruch 16). Der Streifen kann dabei durch Ausstanzungen gebildet sein, oder aber auch durch Formpressen entstanden sein (Anspruch 17).

Die Platte kann an ihrem unteren Ende mittig einen herausgestanzten und senkrecht nach hinten abgebogenen Befestigungsstreifen aufweisen, der auf dem Spreizdübel aufliegt und an seinem Ende ein Rundloch zur Aufnahme einer in die Gewindetüte einschraubbaren Schraube besitzt (Anspruch 18). Die Platte kann mit dem durch das Herausstanzen des Befestigungsstreifens entstandenen Schlitz über einen vom äußeren Ende des Spreizdübels getragenen Kunststoffkopf geschoben sein (Anspruch 19). Besonders günstig ist es, wenn der Kunststoffkopf eine Radialnut bildet, die so ausgebildet ist, daß der Plattenschlitz in die Radialnut aufnehmbar ist (Anspruch 20).

Der Befestigungsstreifen kann auch an der Platte gesondert angesetzt, z. B. angeschweißt sein, wenn dies konstruktive Vorteile bringen sollte (Anspruch 21). Andererseits kann die Platte aber auch ein gepresstes Bauteil sein, an dessen Unterseite sich ein herausgestanzter Schlitz für die Radialnut des Kunststoffkopfes befindet, und von dessen Oberseite ein aus der Plattenebene nach vorn und oben hakenförmig vorspringender Haltestreifen für eine Plattenheizkörpernaht und ein nach hinten senkrecht sich weg erstreckender Haltestreifen zur Befestigung an dem Spreizdübel vorgesehen ist (Anspruch 22).

Die Erfindung wird nachfolgend anhand von Ausführungsbeispielen näher erläutert, die in den Zeichnungen dargestellt sind.

Es zeigt

Fig. 1 in einer Längsschnittansicht einen Spreizdübel mit nur einem Konus und dadurch nicht optimal gleichförmiger Spannwirkung;

Fig. 2 in einer schematisierten perspektivischen Darstellung einen Hohlblockstein, der auf seiner rechten Seite einen Spreizdübel gemäß Fig. 1 und links einen Spreizdübel gemäss der vorliegenden Erfindung darstellt;

Fig. 3 in einer ähnlichen Darstellung wie Fig. 2 einen Hohlkammerstein, gleichfalls mit einem Spreizdübel gemäß Fig. 1 (rechts) bzw. gemäß der Erfindung (links);

Fig. 4 in einer perspektivischen Darstellung einen Spreizdübel gemäß einer Ausführungsform der Erfindung, wobei die Teilfiguren A und B unterschiedliche Ausführungsformen für die Oberfläche des Spannbereichs wiedergeben;

Fig. 5 in der Teilfigur A eine Querschnittsansicht einer ähnlichen Ausführungsform, wie sie in Fig. 4 erkennbar wird, in der Teilfigur B eine etwas abgewandelte Ausführungsform, des inneren Endes des Spreizdübels und in der Teilfigur C eine Querschnittsdarstellung durch dieses abgewandelte Ende, während die Teilfigur D eine Querschnittsansicht durch den vorderen Bereich des Spreizdübels wiedergibt;

Fig. 6 in der Teilfigur A eine Axialschnittansicht und in der Teilfigur B eine Ansicht von vorn auf einen erfindungsgemäß ausgestalteten Kunststoffexzenterkopf;

Fig. 7 in der Teilfigur A eine perspektivische Darstellung und in der Teilfigur B eine teilweise axiale Schnittansicht auf das äußere Ende des Spreizdübels mit aufgesetztem Halterungsteil;

Fig. 8 in einer perspektivischen Darstellung ein anderes für den erfindungsgemäßen Spreizdübel vorgesehenes Halterungsteil, das auch eine seitliche Halterung eines Plattenheizkörpers ermöglicht, wobei die Teilfigur B die Gesamtanordnung und die Teilfigur A Detaildarstellungen umfaßt;

Fig. 9 eine Haltekralle; und

Fig. 10 einen Spreizdübel gemäß Fig. 5, jedoch mit Metallmutter.

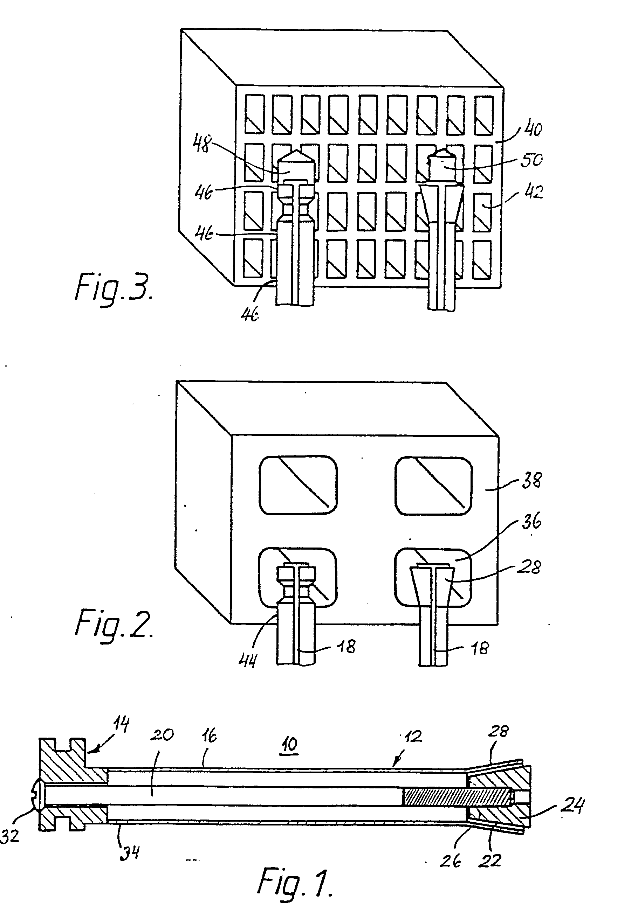

In Fig. 1 ist in einer Längsschnittdarstellung ein Spreizdübel 12 zu erkennen, bestehend aus einer Rundhülse 16 und einem Halterungskopf 14.

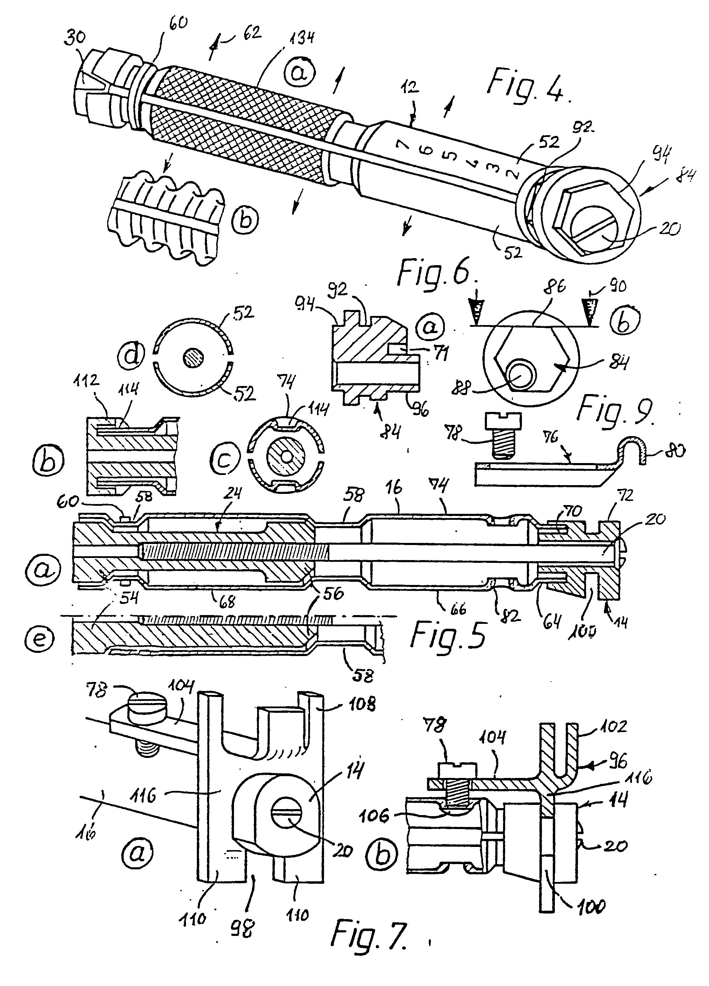

Die Rundhülse 16 ist an einem Ende mit axial verlaufenden Schlitzen 18 (siehe auch Fig. 2) versehen. Durch die Rundhülse 16 erstreckt sich ein Schraubbolzen 20, der in ein eine konische Außenfläche 22 aufweisendes inneres Endteil 24 eingeschraubt ist, das mit dem sich verjüngenden Ende 26 des Konus 22 in das geschlitzte Ende 28 der Rundhülse 16 hineinreicht und mittels einem in einen der Schlitze hineinreichenden Vorsprung 30 (siehe Fig. 4) drehgesichert ist. An seinem anderen Ende weist der Schraubbolzen 20 einen Schraubbolzenkopf 32 auf, der sich auf einem auf dem anderen Rundhülsenende 34 aufgesetzten Endteil oder Halterungskopf 14 abstützt und beim Festziehen den Konus 22 in die Rundhülse 16 hineinzieht und dabei dessen geschlitztes Ende 28 auseinanderdrückt. Daß dabei, wie Fig. 2 erkennen läßt, eine Klemmwirkung nicht eintritt, wenn sich zufällig das geschlitzte Ende 28 in einem Hohlraum 36 eines Hohlblocksteins 38 befindet, ist leicht einzusehen, vielmehr wird beim Auseinanderspreizen des geschlitzten Endteils 28 womöglich der Spanndübel 12 noch tiefer in den Hohlraum 36 hineingezogen und dadurch eine genaue Wandbeabstandung des Halterungskopfes 14 unmöglich gemacht.

Da beim Spreizdübel gemäß Fig. 1 nur das mit dem Konus 22 versehene Ende gespreizt wird, ergibt sich auch eine verhältnismäßig hohe Flächenpressung, so daß bei Hohlkammersteinen 40 gemäß Fig. 3 der sich spreizende Konus sehr leicht die eng aneinanderliegenden Hohlkammern 42 zerdrückt und dadurch zu einem Zerbrechen des Steines 42 im Spannbereich führen kann.

Die in Fig. 4 dargestellte erfindungsgemäße Ausführungsform einem Spreizdübels verteilt dagegen die Verspannung für das gesamte Spannfeld des Spreizdübels 12, so daß beispielsweise bei Hohlblocksteinen immer ein Teil dieses Spannungsfeldes in dem gebohrten Loch liegt, siehe die Bezugszahl 44 in Fig. 2. Bei Hohlkammersteinen verteilt sich der Druck auf eine größere Fläche (siehe die Bezugszahl 46 in Fig. 3), so daß auch hier das Zerspringen verhindert wird. Der erfindungsgemäße Spreizdübel ermöglicht auch einen etwas größeren Bohrlochdurchmesser (vergleiche das Bohrloch 48 mit dem Bohrloch 50 in Fig. 3), so daß sich auch aus diesem Grunde eine Flächenpressungsreduzierung ergibt.

Wie Fig. 4 in einer perspektivischen Ansicht und Fig. 5 in einer Schnittansicht erkennen läßt, weist bei der erfindungsgemäßen Ausführungsform des Spreizdübels das innere Endteil 24 zwei axial zueinander versetzte konusförmige Bereiche 54, 56 auf, so daß der Spreizdübel 12 an zwei axial zueinander versetzten Teilen und damit über eine größere Axialerstreckung auseinandergespreizt wird. Gemäß der in Fig. 5, Teilfigur 5E, dargestellten Ausführungsform besitzt die Rundhülse 16 in dem hier in Rede stehenden Bereich einen Innendurchmesser, der das Einführen zumindest des einen Konusbereiches 56 des inneren Endteils 24 ermöglicht, wobei die Rundhülse 16 eine Einschnürung 58 im geschlitzten Bereich besitzt, in die der eine Konusbereich 56 beim Anziehen des Schraubbolzens 20 eindringt.

Die Rundhülse besitzt zwei oder mehr Einschnürungen 58, wie es die Teilfigur 5A erkennen läßt, wobei das innere Endteil 24 mit entsprechend im axialen Abstand zueinander angeordneten Konusbereichen 54, 56 versehen ist.

Damit ein derartig aufgebauter Spreizdübel einfacher hergestellt werden kann, ist die Rundhülse 16 über die gesamte Längserstreckung an z. B. zwei radial sich gegenüberliegenden Stellen geschlitzt, siehe auch die Fig. 5D, wobei die dadurch gebildeten Hülsenhalbschalen 52 durch zumindest eine die Rundhülse 16 umgreifende Klammer 60 zusammgehalten wird. Zweckmäßigerweise wird eine derartige Klammer in einer der Einschnürungen 58 angeordnet, weil sie dadurch nicht störend über den allgemeinen äußeren Umfang des Spreizdübels 12 hinausreicht. Grundsätzlich wäre aber auch eine Anordnung dort möglich, weil die Klammer nur bis zum Einführen in das Bohrloch erforderlich ist, weil dann das Bohrloch selbst die Rundhülsenhälften zusammenhält, so daß die Klammer vor oder auch während des Einschiebens abgezogen werden könnte.

Der Vorteil des Aufbaus der Rundhülse 16 aus zwei Halbschalen liegt auch noch darin, daß diese sich in sehr einfacher Weise durch Pressen oder Prägen herstellen lassen.

Der in Fig. 5A dargestellte Spreizdübel, der aus zwei Halbschalen 52 sowie einem inneren Endteil 24 mit zumindest zwei Konusbereichen 54, 56 besteht, gibt beim Spannen mittels des Schraubbolzens 20, der in ein Innengewinde im inneren Endteil 24 eingeschraubt ist ein Hineinziehen der Konusbereiche 54, 56 in die z. B. durch Einprägungen entstandenen Einschnürungsflächen 58, wodurch bewirkt wird, daß die beiden Halbschalen 52 in dem Spannbereich parallel nach außen gedrückt werden, siehe die Pfeile 62 in Fig. 4.

Die Halbschalen 52 sind dabei so geformt, siehe Fig. 5A, daß sie nicht nur die Einprägungen 58 für den jeweiligen Konusbereich erhalten, sondern auch im Bereich des äußeren Endes 64 einen kleineren Außendurchmesser bekommen, als es dem Außendurchmesser im Spannbereich (Bezugszahlen 66, 68) entspricht. Dadurch kann ein Kunststoffteil, das auch den Halterungskopf 14 bilden kann, so geformt werden, daß es die beiden Halbschalen 52 ebenfalls zusammenhält, beispielsweise dadurch, daß das Kunststoffteil 14 an seiner einen Stirnseite eine Kreisnut 70 aufweist. Zweckmäßigerweise wird dabei die obere Seite dieses Kunststoffteils 14 so geformt, daß die entsprechende Oberkante 74 des Spreizdübels 12 nicht überschritten wird. Das ist deshalb wichtig, weil dann oben auf dem Spreizdübel 12 weitere Halterungen 76 angebracht werden können, wie sie beispielsweise in Fig. 9 in Form einer mittels einer Schraube 78 befestigbaren Haltekralle 80 zu erkennen ist. Für eine derartige Halterung ist eine ebene Fläche für ausreichende Stabilität von besonderer Bedeutung.

Die Schraube 78 kann dabei in die Gewindebohrung eingeschraubt werden, die nahe dem äußeren Ende der Rundhülse 16 vorgesehen ist, wobei wegen der Halbschaligkeit die Möglichkeit besteht, die Gewindebohrung durch Eindrücken einer Gewindetüte herzustellen, wodurch eine wesentlich höhere Befestigungskraft verwirklicht werden kann, weil die Gewindelänge von eingedrückten Gewindetüten länger ist.

Die Gewindetüte ist in Fig. 5 deutlich zu erkennen, siehe die Bezugszahl 82.

Bei der in Fig. 5A dargestellten Ausführungsform läßt sich ein Halterungskopf 14 in Form eines Formteilaufsatzes anbringen, der einen Sechskantexzenter 84 aufweist, siehe auch Fig. 6. Durch einen derartigen Exzenter gelingt es, einen Heizkörper, den man auf den Spreizdübel setzt, auszuregulieren. Da es nämlich wegen des verhältnismäßig groß zu bohrenden Wandloches oft vorkommt, daß das Bohrloch um einige Millimeter verbohrt wird, läßt sich auf diese Weise die Fehlstellung wieder ausgleichen.

Bei dem in Fig. 6 dargestellten Sechskantexzenter ergibt die Sechskantfläche 86 einen bis über den Drehpunkt 88 reichenden Auflagebereich (siehe die Pfeile 90), der zu keiner ungünstigen Hebelwirkung und damit Drehwirkung um den Drehpunkt 88 mehr führt. Der Sechskantexzenter, von dem in der Teilfigur 6A eine Querschnittsdarstellung zu erkennen ist, ist so aufgebaut, daß die Sechseckexzenterflächen sowohl in einer Nut 92 sowie auch an der Außenfläche 94 angebracht sind, wobei in der Nut 92 der zu tragende Gegenstand (Heizkörper) aufgelegt werden kann. Demgegenüber kann der Sechskant einer Außenfläche 94 zum Ansetzen eines entsprechenden Maulschlüssels verwendet werden, mit dem die Exzenterhöhe einstellbar ist. Darüber hinaus erkennt man an dem Außensechskantexzenter 94, welche Fläche gerade eingestellt ist, da zweckmäßigerweise der Außensechskant 94 und der Innensechskant 92 zueinander fluchtend ausgeführt werden können.

Der Exzenter 84 kann anstelle des in Fig. 5A dargestellten Halterungskopfes 14 auf die Rundhülse 16 aufgesetzt werden, wobei die Rundhülse 16 den Axialteil 96 des Exzenters umgreift, wobei die Nut 70 des Teils 14 in Fig. 5A der Nut 71 des Teils 84 in Fig. 6 entspricht.

Die in Fig. 5A erkennbare Gewindetüte 82 muß nicht unbedingt ein eingeschnittenes Gewinde erhalten, die Gewindetüte kann auch für eine Vernietung Verwendung finden, wie es in Fig. 7 in der Teilfigur B dargestellt ist. Wegen der halbschalenförmigen Form der Rundhülse 16 ist es somit möglich, nicht nur die Gewindetüten selbst zu fertigen, es können auch in einfacher Weise Vernietungen vorgenommen werden, die in einer normalen Rundhülse nur außerordentlich schwierig, wenn überhaupt hergestellt werden können. Geschlossene Rundkörper erlauben nämlich innere Vernietungen nicht, auch ist es schwierig, in geschlossene Rundkörper Gewindetüten einzuziehen, die, wie bereits ausgeführt, den großen Vorteil haben, daß sie ein verlängertes Innengewinde ergeben.

Die in Fig. 7B dargestellte Heizkörperaufnahme 96 stellt ein gepresstes Bauteil dar, an dessen Unterseite sich ein herausgestanzter Schlitz 98 befindet, der in eine Radialnut 100 des Kunststoffhalterungskopfes 14 einschiebbar ist, wobei von der Oberseite des Bauteils 96 ein hakenförmig vorspringender Haltestreifen 102 zum Umfassen des Plattenheizkörperrandes ausgeht. Nach hinten senkrecht sich weg erstreckend befindet sich ein Haltestreifen 104, mit der das Bauteil an der Rundhülse 16 befestigt werden kann, und zwar in dem hier dargestellten Fall durch eine Gewindeschraube 78, die unten einen Ansatz 106 besitzt, der von innen her zur Fixierung der Schraube 78 umgenietet ist.

Die Heizkörperaufnahme 96, die in Fig. 7A perspektivisch dargestellt ist, bildet für die Heizkörpernaht neben dem hakenförmig vorspringenden Haltestreifen 102 noch zwei Gegenstreifen 108, welcher Aufbau besonders einfach durch Pressen oder Stanzen herstellbar ist.

Wie bereits erläutert wurde, dient die Nut 100 zur Stabilisierung und Führung, so daß auch noch andere Befestigungteile stabil und gut höhenverstellbar angebracht werden können. Das in Fig. 7 dargestellte Halteteil 96 führt sich durch seine Schenkel 110 in der Nut 100. Die Verformungen, wie sie beispielsweise durch den hakenförmigen Teil 102 gezeigt werden, können auch andersartig ausgebildet sein, je nach Heizkörperprofil oder der Form anderer Gegenstände, die hier gehalten oder befestigt werden sollen.

In die von der Rundhülse 16 gebildete Tülle oder Tüte 82 lassen sich Befestigungsmöglichkeiten für jede Art von gewünschter Schraube schaffen, mit denen entsprechende Halterungen, die auf dem Spanndübel befestigt werden sollen, festgehalten werden können.

Im inneren Bereich des Spreizdübels 12 hält z. B. ein Gummi 60 die beiden Halbschalen zusammen, das Gummi kann aber auch ersetzt werden durch Klebestreifen, Federringe aus Stahl oder auch durch den Doppelkonus 54, 56, sofern der Doppelkonus Kunststoffnasen 112, siehe Fig. 5B, trägt, die in eine Einprägung 114, siehe Fig. 5C, der Halbschalen eingreifen und so gehalten sind, daß sie sich bei Spreizung von den Halbschalen lösen.

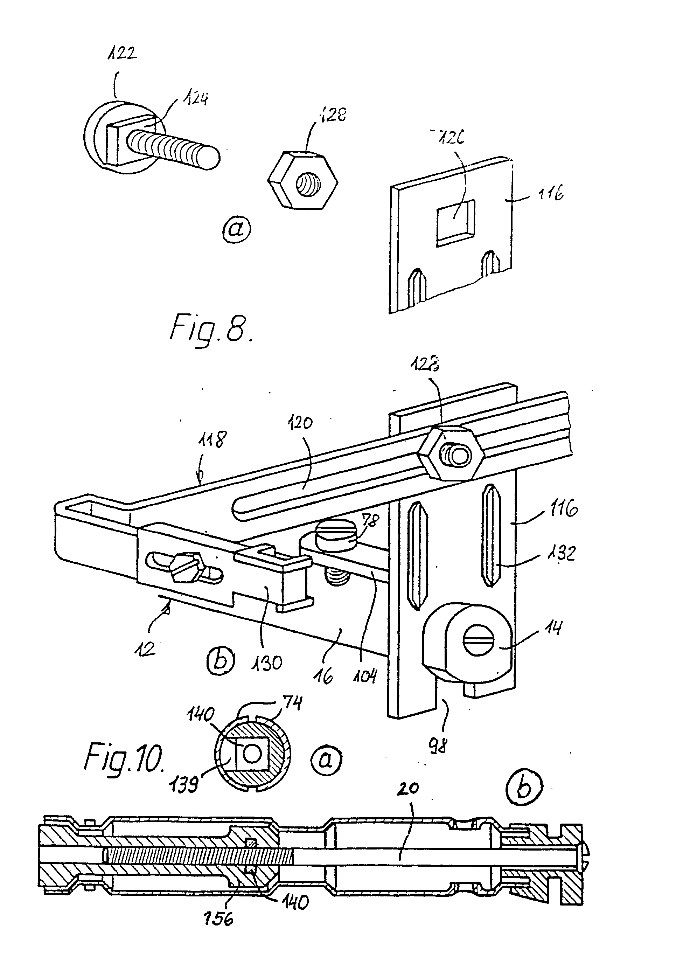

In Fig. 8 ist eine noch andere Ausführungsform einer Halterung zu erkennen, die insbesondere zum Befestigen des Heizkörpers sowohl von oben wie auch von der Seite ermöglichen. Auch hier ist, ähnlich wie bei dem Bauteil gemäß Fig. 7, eine Platte 116 vorgesehen, die mit einem Schlitz 98 in der Radialnut 100 des Kunststoffteils 14 geführt ist. Auch hier ist eine Schraube 78, wie auch bei der Ausführungsform gemäß Fig. 7, an der Rundhülse 16 angenietet und hält damit über ein Bauteil 104, das wiederum durch Anschweißen oder durch Ausstanzung aus dem Schlitz 98 gebildet sein kann, die Halteplatte 116. Von der Platte 116 wird ein Seitenschieber 118 mittels eines Langlochs 120 durch eine Schloßschraube 122 geführt, wobei die Schloßschraube einen Vierkant 124 besitzt, der einerseits in dem entsprechend geformten Durchbruch 126 der Platte 116 der Schloßschraube 122 eine Drehsicherung ergibt, andrerseits durch den Durchbruch 126 noch soweit hindurchreichen kann, daß er gleichzeitig auch dem Seitenschieber 118 über die Langlochseitenflächen eine Führung gibt, so daß der Seitenschieber 118 im wesentlichen seine horizontale Stellung beibehält, insbesondere dann, wenn die Schloßschraube 122 mittels der Mutter 128 festgeschraubt wird.

Diese Seitenhaltebefestigung ist noch mittels der vorderen Pratze 130 seitenverstellbar, höhenverstellbar durch die Schraube 78 und tiefenverstellbar durch den Spreizdübel 12. Es ist erkennbar, daß der erfindungsgemäße Spreizdübel dadurch eine außerordentliche Variabilität der Anwendung ergibt, zumal der Seitenschieber 118 auch nach Lösen der Mutter 128 senkrecht auf der Platte 116 montiert werden kann, in welchem Falle der zusätzlich mittels vorspringenden Streifen 132 geführt werden kann, die bei vertikaler Anordnung den Seitenschieber 118 über seine Seitenkanten drehsichernd halten. Stattdessen könnte auch ein vorspringender Streifen mittig angeordnet werden, so daß sich eine zusätzliche Führung über das Langloch 120 ergibt, wie auch natürlich für die horizontale Montage entsprechende vorspringende Streifen (nicht dargestellt) zu den genannten Führungszwecken vorgesehen sein können. Die Streifen müssen jeweils so geordnet werden, daß sie bei Montage des Seitenschiebers in der anderen Richtung diesem eine freie Rinne lassen, so daß er direkt an der Platte 116 anliegt. Bei den in Fig. 8B dargestellten Streifen 132 ist dies dadurch erreicht, daß diese Streifen 132 ein Stück unterhalb des Durchbruches 126 angeordnet sind.

Die Streifen können aufgesetzt (z. B. durch Schweißen) sein oder sie können durch Pressvorgänge bei Herstellung der Platte 116 entstanden sein, oder aber durch Herausstanzen aus der Platte 116 gebildet worden sein.

Es sei noch erwähnt, daß auf der Außenfläche des Spannbereichs des Spreizdübels 12 eine Verriffelung 134 vorgenommen werden kann. Diese Aufrauhung verhindert ein zu leichtes Herausziehen des Spreizdübels aus dem Mauerwerk oder ähnlichen Haltematerialien, da durch die Verriffelung oder Aufrauhung ein wesentlich höherer Reibungsfaktor entsteht. Alternativ kann die Aufrauhung auch die in Fig. 4B dargestellte Wellenform annehmen.

In Fig. 10, Teilfigur B, ist ein Spreizdübel ähnlich der der Fig. 5 zu erkennen, wobei jedoch in dem Kunstoffteil 156 eine sogenannte Gewindemutter oder Gewindeteil 140 vorgesehen ist. Zu diesem Zweck ist die Mutter entweder eingespritzt bzw. umspritzt, oder, günstiger, in dem Kunstoffteil 156 wird beim Spritzen des Kunstoffteils eine Tasche 139 eingegossen, in die bei der Montage ein metallisches Gewindeteil 140 eingeführt wird, siehe Teilfigur 10 A, eine Querschnittsdarstellung. Wegen der Ummantelung durch die Außenschalen 74 kann die (zweckmäßigerweise Vierkantform aufweisende) Gewindemutter nie herausfallen, auch dann nicht, wenn die Schraube 20 ganz aus der Konstruktion herausgedreht ist.

Der Vorteil dieser kostengünstig herstellbaren Alternative gegenüber Gewinde in Kunstoff ist der, daß eine erheblich höhere Widerstandskraft gegen Ausreißen sich ergibt, außerdem läßt ein Metallgewinde auch mehrmaliges Ver- und Entspannen zu. Demgegenüber ist bei Kunststoffgewinde eine Deformation des Gewindeteils bei mehrfacher Betätigung nicht auszuschließen.

**Patentansprüche**

1. Spreizdübel (12), insbesondere zur Befestigung von Plattenheizkörpern, bestehend aus einer an einem Ende mit achsial verlaufenden Schlitzen (18) versehenen Rundhülse (16), einem durch die Rundhülse (16) hindurchreichenden Schraubbolzen (20), der in ein eine konische Außenfläche (22) aufweisendes Endteil (24) eingeschraubt ist, das mit dem sich verjüngenden Ende (26) des Konus (22) in das geschlitzte Ende (28) der Rundhülse (16) drehgesichert hineinreicht, und mit einem am anderen Ende des Schraubbolzens (20) angeordneten Schraubbolzenkopf (32), der sich auf einem auf dem anderen Rundhülsenende (34) aufgesetzten äußeren Endteil (14) abstützt und beim Festziehen den Konus (22) in die Rundhülse (16) hineinzieht und dabei das geschlitzte Ende (28) der Rundhülse (16) auseinanderdrückt, wobei das innere Endteil (24) zwei achsial zueinander versetzte konusförmige Bereiche (54, 56) aufweist, und wobei die Rundhülse (16) entsprechend zu diesen Bereichen angeordnete Auflaufflächen besitzt und einen Innendurchmesser hat, der das Einführen zumindest des einen (56) der Konusbereiche des inneren Endteils (24) ermöglicht, dadurch gekennzeichnet, daß die Rundhülse (16) zwei oder mehr Einschnürungen (58) besitzt, die auch die Auflaufflächen bilden, daß sich zumindest eine dieser Einschnürungen (58) im geschlitzten Bereich befindet, in den der eine (56) der Konusbereiche beim Anziehen eindringt und daß die Rundhülse (16) aus zwei durch Pressen gebildeten Hülsenhalbschalen (52) besteht, die durch zumindest eine die Rundhülse (16) umgreifende Klammer (60) zusammengehalten werden.

2. Spreizdübel nach Anspruch 1, dadurch gekennzeichnet, daß das eine konische Außenfläche (22) aufweisende Endteil (24), das mit dem sich verjüngenden Ende (26) des Konus (22) in das geschlitzte Ende (28) der Rundhülse (16) drehgesichert hineinreicht, mittels einem in einen der Schlitze hineinreichenden Vorsprung (30) drehgesichert ist.

3. Spreizdübel nach Anspruch 1 oder 2, dadurch gekennzeichnet, daß die Klammer (60) in einer Einschnürung (58) angeordnet ist.

4. Spreizdübel nach Anspruch 1, 2 oder 3 dadurch gekennzeichnet, daß die Klammer (60) durch einen Gummiring, Federring aus Stahl oder Klebstreifen gebildet ist.

5. Spreizdübel nach einem der Ansprüche 1 bis 4, dadurch gekennzeichnet, daß die Halbschalen zusätzlich durch eine Kreisnut im äußeren Endteil (14) zusammengehalten werden.

6. Spreizdübel nach einem der Ansprüche 1 bis 5, dadurch gekennzeichnet, daß die Halbschalen (52) zusätzlich durch von dem inneren Endteil (24) ausgehenden Nasen (112) zusamengehalten werden, die in entsprechende Einprägungen (114) am Ende der Halbschalen (52) eingreifen.

7. Spreizdübel nach einem der Ansprüche 1 bis 6, dadurch gekennzeichnet, daß das äußere Ende (64) der Rundhülse (16) einen reduzierten Durchmesser besitzt und von dem äußeren Endteil (14) umgriffen ist, dessen Außenumfang, insbesondere der nach oben weisende Bereich (72) des Außenumfangs, mit der Fluchtlinie des nicht reduzierten Rundhülsendurchmessers, insbesondere mit dessen nach oben weisenden Bereich (74) übereinstimmt und dadurch eine ebene Auflagefläche für weitere Halterungsteile bildet.

8. Spreizdübel nach einem der Ansprüche 1 bis 7, dadurch gekennzeichnet, daß die Rundhülse nahe ihrem äußeren Ende (64) eine Gewindebohrung (82) aufweist, die durch eine Gewindetüte (82) gebildet wird, die in die Rundhülsenhälften eingedrückt ist.

9. Spreizdübel nach einem der Ansprüche 1 bis 8, dadurch gekennzeichnet, daß er einen Kunststoffexzenterkopf zur Ausrichtung des zu befestigenden Heizkörpers oder dgl. besitzt.

10. Spreizdübel nach Anspruch 9, dadurch gekennzeichnet, daß der Exzenterkopf eine Vier- oder Sechskantaußenform aufweist.

11. Spreizdübel nach Anspruch 9 oder 10, dadurch gekennzeichnet, daß der Exzenterkopf innerhalb einer Ringnut (92) eine Vier- oder Sechskantauflagefläche bildet und daß am Stirnende des Exzenterkopfes eine dazu fluchtende Vierkant- oder Sechskantbetätigungsfläche vorgesehen ist.

12. Spreizdübel nach einem der Ansprüche 1 bis 11, dadurch gekennzeichnet, daß er Teil einer Plattenheizkörperbefestigung ist, die eine vertikale, auf dem Spreizdübel (12) aufliegende Schiene oder Platte (116) sowie eine weitere, durch eine Schiene oder einen Seitenschieber gebildete Befestigungspratze (130) für den Rand des Plattenheizkörpers umfaßt, die in Richtung der ersten Schiene oder Platte (116) vertikal oder in einer senkrechten Richtung dazu horizontal an der ersten Schiene oder Platte (116) verstellbar befestigt ist.

13. Spreizdübel, nach Anspruch 12, dadurch gekennzeichnet, daß die erste Schiene oder Platte (116) mit einem Durchbruch (126) für eine Klemmschraube (122, 124, 128) und die zweite Schiene oder der Seitenschieber (118) mit einem oder mehreren Langlöchern (120) oder einem Längsschlitz versehen ist, und daß durch den Durchbruch (126) und das Langloch (120) die Klemmschraube hindurchgeführt ist.

14. Spreizdübel nach Anspruch 13, dadurch gekennzeichnet, daß der Durchbruch prismatischen, insbesondere quadratischen Querschnitt besitzt und der Kopf der Klemmschraube mit einem entsprechend geformten Kopfhals (124) drehsichernd in den Durchbruch (126) hineinragt.

15. Spreizdübel nach Anspruch 14, dadurch gekennzeichnet, daß der Kopfhals (124) der Klemmschraube (122) durch den Durchbruch (126) hindurch und in das Langloch oder den Längsschlitz (120) hineinreicht und dadurch dem Seitenschieber verleiht eine Führung in horizontaler oder vertikaler Richtung.

16. Spreizdübel nach einem der Ansprüche 12 bis 15, dadurch gekennzeichnet, daß die Platte (116) unterhalb des Durchbruchs (126) zumindest einen, vorzugsweise zwei vertikal ausgerichtete vorspringende Streifen (132) trägt, die bei vertikaler Anordnung der zweiten Schiene oder des Seitenschiebers (118) in dessen Schlitz (120) drehsichernd eingreifen oder sich an dessen Seitenkanten drehsichernd anlegen.

17. Spreizdübel nach Anspruch 16, dadurch gekennzeichnet, daß die Streifen (132) Ausstanzungen darstellen oder durch Formpressung entstanden sind.

18. Spreizdübel nach einem der Ansprüche 12 bis 17, dadurch gekennzeichnet, daß die Platte (116) an ihrem unteren Ende etwa mittig einen herausgestanzten und senkrecht nach hinten abgebogenen Befestigungsstreifen (104) aufweist, der auf dem Spanndübel (12) aufliegt und an seinem Ende ein Rundloch zur Aufnahme einer in die Gewindetüte (82) einschraubbaren Schraube (78) besitzt.

19. Spreizdübel nach Anspruch 18, dadurch gekennzeichnet, daß die Platte (116) mit dem durch das Ausstanzen des Befestigungsstreifens (104) entstandenen Schlitz (98) über einen vom äußeren Ende des Spreizdübels (12) getragene Kunststoffkopf (14) geschoben ist.

20. Spreizdübel nach Anspruch 19, wobei der Kunststoffkopf eine Radialnut bildet, dadurch gekennzeichnet, daß der Plattenschlitz (98) in die Radialnut (100) aufnehmbar ist.

21. Spreizdübel nach einem der Ansprüche 17 bis 19 dadurch gekennzeichnet, daß der Befestigungsstreifen (104) an der Platte (116) gesondert angesetzt, z. B. angeschweißt ist.

22. Spreizdübel nach einem der Ansprüche 17 bis 19, dadurch gekennzeichnet, daß die Platte (116) ein gepresstes Bauteil ist, an dessen Unterseite sich ein herausgestanzter Schlitz (98) für die Radialnut (100) des Kunststoffkopfes (14) befindet und an dessen Oberseite ein aus der Plattenebene nach vorn und oben hakenförmig vorspringender Haltestreifen (102) für eine Plattenheizkörpernaht angeordnet ist und daß weitere, in der Plattenebene verlaufende Vorsprünge (108) sich parallel zu dem Hakenende (102) erstrecken, und daß von der Platte (116) ein sich senkrecht weg erstreckender Haltestreifen (104) zur Befestigung an dem Spreizdübel (12) vorgesehen ist.

23. Spreizdübel nach einem der Ansprüche 18 bis 22, dadurch gekennzeichnet, daß die Befestigungsschraube (78) für das Halteteil in der Gewindetüte (82) vernietet ist.

24. Spreizdübel nach Anspruch 23, dadurch gekennzeichnet, daß die Schraube (78) in der Gewindetüte (82) derart vernietet ist, daß sie noch drehbar ist, und daß die Bohrung in dem Haltestreifen (104) ein zu dem Gewinde der Schraube (78) passendes Bohrgewinde besitzt und dadurch die Höhe des Haltestreifens (104) durch Drehen der Schraube (78) verstellbar ist.

25. Spreizdübel nach einem der Ansprüche 1 bis 24, dadurch gekennzeichnet, daß das innere Endteil (24) aus Kunstoff besteht und eine achsial angeordnete Gewindebohrung für den Schraubbolzen (20) oder eine Gewindemutter (140) aufweist, die in den Kunstoff eingegossen oder in eine im Kunstoff eingeformte Tasche (139) eingeschoben ist.

**Revendications**

1. Cheville expansible (12), notamment pour la fixation de plaques de radiateur, constituée par une douille (16) munie à une extrémité de fentes (18) axiales, un boulon filité (20) traversant ladite douille (16) et qui est vissé dans une pièce d'extrémité (24) comportant une surface extérieure conique (22), qui pénètre, par l'extrémité (26) du cône (22) allant en se rétrécissant, dans l'extrémité (28) munie de fentes de la douille (16), de manière à être bloquée en rotation, ainsi qu'une tête de boulon (32) agencée à l'autre extrémité du boulon fileté (20), qui s'appuie sur une pièce d'extrémité extérieure (14) agencée sur l'autre extrémité (34) de la douille et qui entraîne lors du serrage, le cône (22) à l'intérieur de la douille (16) en élargissant ainsi l'extrémité (28) de la douille (16), qui supporte des fentes, la pièce d'extrémité intérieure (24) comportant deux zones en forme de cône (54, 56) décalées axialement l'une par rapport à l'autre, la douille (16) comportant, de manière correspondante à ces zones, des surfaces d'arrêt et présentant un diamètre intérieur qui permet l'introduction d'au moins l'une (56) des zones en forme de cône de la pièce d'extrémité intérieure (24), caractérisée en ce que la douille (16) comporte deux ou plusieurs gorges (58) qui constituent également les surfaces d'arrêt, en ce qu'au moins l'une de ces gorges (58) se trouve dans la zone munie de fentes dans laquelle l'une (56) des zones coniques pénètre lors du serrage et en ce que la douille (16) consiste en deux demi coquilles (52) de douille obtenues par pressage, qui sont assemblées par au moins une agrafe (60) entourant la douille (16).

2. Cheville expansible selon la revendication 1 caractérisée en ce que la pièce d'extrémité (2') qui présente une surface extérieure conique (22) et qui pénètre dans l'extrémité (28) munie de fentes de la douille (16), de manière fixe en rotation, par son extrémité de cône (22) allant en se retréciśsant, est bloquée en rotation à l'aide d'un élément en saillie (30) coulissant dans l'une des fentes.

3. Cheville expansible selon la revendication 1 ou 2 caractérisée en ce que l'agrafe (60) est agencée dans une gorge (58).

4. Cheville expansible selon les revendications 1, 2 ou 3 caractérisée en ce que l'agrafe (60) est constituée par un anneau en caoutchouc, un anneau en acier ressort ou par une bande adhésive.

5. Cheville expansible selon l'une quelconque des revendications 1 à 4 caractérisée en ce que les demi-coquilles sont encore maintenues assemblées par une rainure annulaire pratiquée dans la pièce d'extrémité (14).

6. Cheville expansible selon l'une quelconque des revendications 1 à 5 caractérisée en ce que les demi-coquilles (52) sont encore maintenues assemblées par des tétons (112) partant de la pièce d'extrémité intérieure (24) et faisant prise dans des empreintes correspondantes (114) de l'extrémité des demi-coquilles (52).

7. Cheville expansible selon l'une quelconque des revendications 1 à 6 caractérisée en ce que l'extrémité extérieure (64) de la douille (16) présente un diamètre réduit et est entouré par la pièce d'extrémité extérieure (14) dont le périmètre extérieur, notamment dans la zone (72) du périmètre extérieur, orientée vers le haut, correspond à la ligne de fuite du diamètre non réduit de la douille, notamment à la zone de celle-ci orientée vers le haut (74) et constitue ainsi une surface d'appui pour d'autres éléments de fixation.

8. Cheville expansible selon l'une des revendications 1 à 7 caractérisée en ce que la douille présente, à proximité de son extrémité extérieure (64) un filet intérieur (82) constitué par une encoche (82) pratiquée dans les deux demi-coquilles.

9. Cheville expansible selon l'une quelconque des revendications 1 à 8 caractérisée en ce qu'elle comporte une tête excentrique en matière synthétique pour le réglage du radiateur ou analogue à fixer.

10. Cheville expansible selon la revendication 9 caractérisée en ce que la tête excentrique présente une forme extérieure carrée ou hexagonale.

11. Cheville expansible selon la revendication 9 ou 10 caractérisée en ce que la tête excentrique forme à l'intérieur d'une rainure annulaire (92) une surface d'appui carrée ou hexagonale et en ce que, à l'extrémité frontale de la tête excentrique, est prévue une surface de commande carrée ou hexagonale alignée à celle-ci.

12. Cheville expansible selon l'une des revendications 1 à 11 caractérisée en ce qu'elle fait partie d'une fixation de plaques de radiateur, qui comporte un rail ou une plaque (16) verticale s'appuyant sur la cheville expansible (12) ainsi qu'une autre patte de fixation (130) constituée par un rail ou une glissière latérale, destinés au bord des plaques de radiateur, ladite patte de fixation est montée de manière réglable sur le premier rail ou la première plaque (116), verticalement en direction du premier rail ou de la première plaque ou bien horizontalement, perpendiculairement à cette dernière direction.

13. Cheville expansible selon la revendication 12 caractérisée en ce que le premier rail ou la première plaque (116) est munie d'un perçage (126) destiné à une vis de serrage (122, 124, 128) et que le deuxième rail ou la glissière latérale (118) comporte un ou plusieurs trous oblongs (120) ou une fente longitudinale et en ce que la vis de serrage est menée à travers le perçage (126) et le trou oblong (120).

14. Cheville expansible selon la revendication 13 caractérisée en ce que le perçage présente une section en forme de prisme, notamment en forme de carré et la tête de la vis de serrage munie d'un col correspondant (124) traverse le perçage (126) en étant bloqué en rotation.

15. Cheville expansible selon la revendication 14 caractérisée en ce que le col (124) de la vis de serrage (122) traverse le perçage (126) et le trou oblong ou la fente longitudinale (120) et fournit ainsi un guidage de la glissière latérale en direction horizontale et verticale.

16. Cheville expansible selon l'une quelconque des revendications 12 à 15 caractérisée en ce que la plaque (116) disposée en dessous du percage (126) porte au moins un, de préférence deux bossages (132) orientés verticalement qui s'engagent dans la fente (120) de la glissière latérale (118) ou viennent à buter contre les arêtes de celle-ci, en la bloquant en rotation, lorsque le deuxième rail est agencé verticalement.

17. Cheville expansible selon la revendication 16 caractérisée en ce que les bossage (132) sont obtenus par estompage ou par pressage en forme.

18. Cheville expansible selon l'une quelconque des revendications 12 à 17 caractérisée en ce que la plaque (116) comporte à son extrémité inférieure, approximativement au milieu, une patte de fixation (104) découpée et pliée perpendiculairement vers l'arrière, qui s'appuie sur la cheville de serrage (12) et qui comporte à son extrémité un trou rond destiné à recevoir une vis (78) pouvant tourner dans le filet (82).

19. Cheville expansible selon la revendication 18 caractérisée en ce que la plaque (116) est glissée, via la fente (38) obtenue par suite du découpage de la patte de fixation (104), sur une tête en matière synthétique (14) portée par l'extrémité extérieure de la cheville expansible (12).

20. Cheville expansible selon la revendication 19 dans laquelle la tête en matière synthétique forme une rainure radiale, caractérisée en ce que la fente (98) pratiquée dans la plaque est engageable dans la rainure radiale (100).

21. Cheville expansible selon l'une quelconque des revendications 17 à 19 caractérisée en ce que la patte de fixation (104) est fixée individuellement à la plaque (116), par exemple par soudage.

22. Cheville expansible selon l'une quelconque des revendications 17 à 19 caractérisée en ce que la plaque (116) est une pièce pressée comportant, à sa partie inférieure, une fente découpée (98) destinée à la rainure radiale (100) de la tête en matière synthétique (14) et, à sa partie supérieure, une patte de support (102) destinée à un bord de plaque de radiateur, patte (102) faisant saillie vers l'avant et vers le haut en forme de crochet sur le plan de la plaque, en ce que d'autres éléments en saillie (108) sur le plan de la plaque s'étendent parallèlement à l'extrémité de crochet (102), et en ce qu'une patte de fixation (104) s'étendant perpendiculairement par rapport à la plaque (116) est prévue pour la fixation à la douille expansible (12).

23. Cheville expansible selon l'une des revendications 18 à 22 caractérisée en ce que la vis de fixation (78) de l'élément de fixation est rivée dans l'encoche à filet (82).

24. Cheville expansible selon la revendication 23 caractérisée en ce que la vis (78) est virée de manière telle dans l'encoche à filet (82) qu'elle peut encore tourner et en ce que le perçage pratiqué dans la patte de fixation (104) comporte un taraudage correspondant au filet de la vis (78) et que, de ce fait, la hauteur de la patte de fixation (10') est réglable par rotation de la vis (78).

25. Cheville expansible selon l'une quelconque des revendications 1 à 24 caractérisée en ce que la pièce d'extrémité intérieure (24) est constituée par une matière synthétique et comporte un taraudage axial destiné au boulon (20) ou un écrou (140) qui est coulé dans la matière synthétique ou est introduit dans un évidement (139) moulé dans la matière synthétique.

**Claims**

1. Expansion dowel (12), particularly for fastening panel radiators, comprising a round casing (16) with axially orientated slits (18) at its one end, a screw bolt (20) projecting through the round casing (16) to be screwed into an end section (24) having a conical outer surface (22), the end section along with the narrow end (26) of the cone (22) penetrating into the slotted end (28) of the round casing (16) so as not to rotate, and with a screw bolt head (32) arranged at the other end of the screw bolt (20) and resting on an outer end section (14) attached to the other end of the round casing (34), the screw bolt head when tightened pulling the cone (22) into the round casing (16) thus squeezing the slotted end (28) of the round casing (16) apart, whereby the inner end section (24) has two cone-shaped areas (54, 56) axially displaced with regard to one another, the round casing (16) having areas corresponding to these areas and an internal diameter which allows at least one (56) of the cone areas to be introduced into the inner end section (24), characterised in that the round casing (16) has two or more constrictions (58) which also form the overrun areas, in that at least one of these constrictions (58) is located in the slotted area into which one (58) of the cone-shaped areas penetrates during tightening, and in that the round casing (16) consists of two casing half shells (52) formed by pressing which are held together by at least one clamp (60) surrounding the round casing (16).

2. Expansion dowel according to claim 1 characterised in that one end section (24) with a conical external surface (22) penetrating into the narrow end (26) of cone (22) in slotted end (28) of round casing (16) so as not to rotate, is prevented from rotating by means of a projection (30) extending into one of the slits.

3. Expansion dowel according to claim 1 or 2 characterised in that the clamp (60) is arranged in one constriction (58).

4. Expansion dowel according to claim 1, 2 or 3 characterised in that clamp (60) is in the from of a rubber ring, steel spring or adhesive strip.

5. Expansion dowel according to one of claims 1 to 4 characterised in that the half shells are additionally held together by a round groove in the outer end section (14).

6. Expansion dowel according to one of claims 1 to 5 characterised in that the half shells (52) are also held together by projections (112) from the inner end section (24) which engage in corresponding recesses (114) at the end of the half shells (52).

7. Expansion dowel according to one of claims 1 to 6 characterised in that the outer end (64) of round casing (16) has a decreasing diameter and is surrounded by the outer end section (14) the external circumference of which, particularly the upwards pointing area (72) of the external circumference, corresponds to the alignment of the non-reducing round casing diameter, particularly the upwards pointing section (74), thus producing a level surface for further fastening parts.

8. Expansion dowel according to one of claims 1 to 7 characterised in that the round casing in the vicinity of its outer end (64) has a threaded boring (82) formed by a thread (92) pressed into the round half shells.

9. Expansion dowel according to one of claims 1 to 8 characterised in that it has a synthetic eccentric head for aligning the heater etc to be fastened.

10. Expansion dowel according to claim 9 characterised in that the eccentric head is quadratic or hexagonal.

11. Expansion dowel according to claim 9 or 10 characterised in that the eccentric head forms a quadratic or hexagonal surface within an annular groove (92) and that at the face end of the eccentric head an aligned quadratic or hexagonal operating surface is provided.

12. Expansion dowel according to one of claims 1 to 11 characterised in that it is part of a fastening for panel radiators which comprises a rail or panel (116), as well as an additional fastening claw (130) formed by a rail or lateral slide for the edge of the panel radiator, supported on the expansion dowel (12), the claw being fastened vertically in the direction of the first rail or panel (116) or adjustably in a perpendicular direction thereto horizontally on the first rail or panel (116).

13. Expansion dowel according to claim 12 characterised in that the first rail or panel (116) is provided with an aperture (126) for a locking screw (122, 124, 128) and the second rail or lateral slide (118) has one or more longitudinal holes (120) or one longitudinal slit, and in that the locking screw penetrates through the aperture (126) and the longitudinal hole (120).

14. Expansion dowel according to claim 13 characterised in that the aperture is of a prismatic, more particularly quadratic cross section, and the head of the locking screw, with a correspondingly formed neck (124) penetrates into the aperture (126) so as not to rotate.

15. Expansion dowel according to claim 14 characterised in that the neck (124) of the locking screw (122) penetrates through the aperture (126) and into the longitudinal hole or longitudinal slit (120) and thus povides the lateral slide with a guide in a horizontal or vertical direction.

16. Expansion dowel according to one of claims 12 to 15 characterised in that the panel (116) beneath the aperture (126) has as at least one, preferably two, vertically arranged projecting strips (132), which when the second rail or the lateral slide is vertically arranged, penetrate into its slit 120 or rest against its sides so as not to rotate.

17. Expansion dowel according to claim 16 characterised in that the strips (132) are formed by stamping or compression moulding.

18. Expansion dowel according to one of claims 12 to 17 characterised in that panel (116) at approximately the middle of its lower end has a stamped and perpendicularly bent back attaching strip (104), which rests on the expansion dowel (12) and has at its end a circular hole for receiving a screw (78) which is screwed into thread (82).

19. Expansion dowel according to claim 18 characterised in that the panel (116) is slid over the synthetic head (14) at the outer end of expansion dowel (12) by means of slit (98) produced by stamping out of the attachment strip (104).

20. Expansion dowel according to claim 19 in which the synthetic head forms a radial groove, characterised in that the panel slit (98) fits into radial groove (100).

21. Expansion dowel according to one of claims 17 to 19 characterised in that the attachment strip (104) is separately attached, for example by welding, to panel (116).

22. Expansion dowel according to one of claims 17 to 19 characterised in that the panel (116) is a moulded component, on the underside of which there is a stamped out slit (98) for the radial groove (100) of the synthetic head (14), and on the upper side of which a hook-shaped retaining strip (102) projects out and up from the panel for the radiator seam, and in that further projections (108) at panel level extend parallel to the end of the hook (102), and that a retaining strip (104) for attaching to the expansion dowel (12) extends perpendicularly away from panel (116).

23. Expansion dowel according to one of claims 18 to 22 characterised in that the locking screw (78) for the retaining section is riveted in thread (82).

24. Expansion dowel according to claim 23 characterised in that the screw (78) is riveted in thread (82) in such a way that it is still rotatable, and in that the boring in retaining strip (104) has a thread corresponding to the thread of screw (78), the height of the retaining strip (104) thus being adjustable by turning the screw (78).

25. Expansion dowel according to one of claims 1 to 24 characterised in that the inner end section (24) is made of synthetic material and has an axially arranged threaded boring for screw bolt (20) or a threaded nut (140), which is moulded into the synthetic material or is pushed into a pocket (139) formed in the synthetic material.

Fig.3.

Fig.2.

Fig.1.

Fig. 4.

Fig. 6.

Fig. 9.

Fig. 5.

Fig. 7.

122
124
128
120
116

ⓐ

Fig.8.

128
118
120
78
116
132
12
130
16
104
14
98

140
74
139
ⓐ

Fig.10.
20
ⓑ

156
140